# EUROPEAN PATENT APPLICATION

(11) **EP 4 389 796 A1**
(43) Date of publication of application: **26.06.2024**
(21) Application number: 23217132.2
(22) Date of filing: 15.12.2023
(51) Int. Cl.: C08G 69/00, C08G 73/10, C08L 79/08

(54) **MELT PROCESSABLE POLYIMIDES WITH HIGH GLASS TRANSITION TEMPERATURE**

(30) Priority: 20.12.2022 EP 22214870
(71) Applicant: Evonik Fibres GmbH, 4861 Schörfling am Attersee (AT)
(72) Inventor: Cristurean, Doris, 4533 Piberbach (AT); Beer, Stephan, 4863 Seewalchen am Attersee (AT); Teasdale, Ian, 4040 Linz (AT); Brüggemann, Oliver, 4073 (AT)
(74) Representative: Evonik Patent Association

(57) **Abstract**

The present invention relates to novel, melt-processable polyimides that shows a high glass transition temperature, a process for preparing these polyimides and also the use of the new polyimides.

## Description

The present invention relates to novel, melt-processable polyimides that show a high glass transition temperature, a process for preparing these polyimides and also the use of the new polyimides.

High performance and high-temperature polymers exhibit superior thermal stability, heat resistance and chemical resistance compared to commodity polymers. These high-performance polymers additionally demonstrate good mechanical properties, with increased stability under high load and stress and dimensional stability. Being an important representative of the high performance and high-temperature polymers, polyimides show remarkable properties. They offer high-temperature stability with decomposition temperatures over 450 °C and a high glass transition temperature (*T*_{g}) in the range of 200 °C and 300 °C some even exceeding 400 °C. A major reason for the thermal stability is the high degree of aromaticity. High aromaticity results in increased stiffness of the polymer chain leading to an amorphous structure. The increased chain rigidity makes polyimides often insoluble and infusible, which causes difficulties in melt processing. This is because by processing from the melt the thermal stability limit of the polyimide may be reached, and polymer degradation may take place during processing. For this reason, polyimides are often processed from their precursor polyamic acid by casting followed by imidization of the polyamic acid, e.g. by heat treatment, to obtain the polyimide. Another method applied for processing of polyimides is the hot press technique where the polymer powder is placed in a mould undergoing sintering and pressure treatments. The obtained polyimide shape can be further processed by drilling or cutting into the desired shape. A further processing method for polyimides would be by ram extrusion which yields a rod-shaped material. The processing methods of polyimides available today are complex and lack efficiency, thus, processing of polyimides by the use of conventional moulding machines is desirable and attempts have been made to develop melt processable polyimides.

Mittal, K. L., "Polyimides Synthesis, Characterization and Applications", 1st ed.; Springer, Boston, MA, 1984. https://doi.org/https://doi.org/10.1007/978-1-4615-7637-2 and Okuyama, K. et al., "X-Ray Structure Analysis of a Thermoplastic Polyimide", Macromolecules 1992, 25 (26), 7261-7267. https://doi.org/10.1021/ma00052a030 disclose concepts to introduce flexible units like ether groups in polyimide polymers to enhance the chain movement. Based on this concept, Tamai, S. et al., "Melt Processible Polyimides and Their Chemical Structures", Polymer (Guildf), 1996, 37 (16), 3683-3692, prepared various diamines with different amount of ether groups and synthesized polyimides with the dianhydride ODPA as shown in Table 1. As can be observed from Table 1, most polyimides comprising ether functionalities exhibit insufficient thermal resistance. Having a *T*_{g} < 270°C these polyimides cannot be used in high temperature applications. Polyimide a) of Table 1 does not comprise ether groups and is not melt processable.

**Table 1: Polyimides with the dianhydride ODPA and different amount of ether groups containing diamines showing their influence on the thermal properties. (n.d.= not detected)**

| 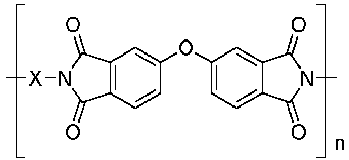 | | | | |
|---|---|---|---|---|
| **Dianhydride** | | **X** | **T_{g} / °C** | **Tₘ / °C** |
| (a) | ODPA | 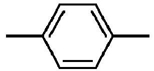 | 326 | n.d. |
| (b) | | 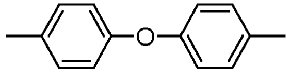 | 242 | 374 |
| (c) | | 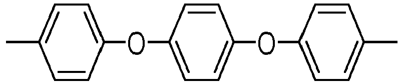 | 222 | 428 |
| (d) | | 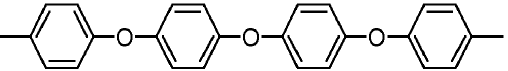 | 204 | 332 |
| (e) | | 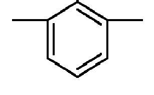 | 261 | 491 |
| (f) | | 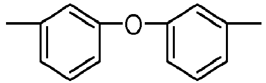 | 205 | n.d. |
| (g) | | 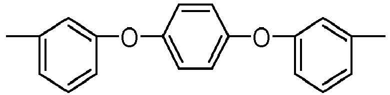 | 189 | 318 |
| (h) | | 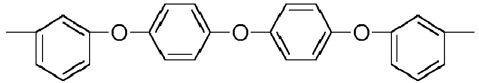 | 181 | n.d. |

Another concept applied to develop melt processable polyimides was the introduction of crystallinity to polyimides. This should improve their solvent resistance, increase the modulus and should keep their mechanical properties almost unchanged above their T_{g}. Some examples of commercially available semicrystalline polyimides and their thermal properties are depicted in Table 2. All polyimides shown in Table 2 have in common the presence of arylene ether and arylene keto moieties and meta catenations.

**Table 2: Examples of partly commercially available, semicrystalline polyimides and their thermal properties.**

| **Name** | **Structure** | ***T_{g}* / °C** | ***Tₘ* / °C** |
|---|---|---|---|
| LaRC-CPI | 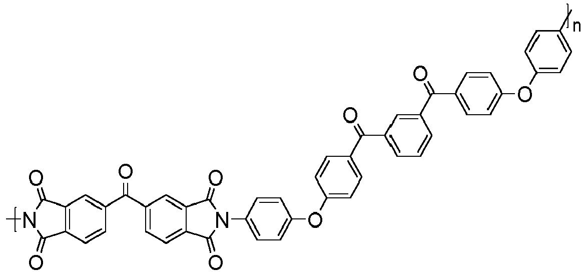 | 222 | 350 |
| LaRC CPI-2 | 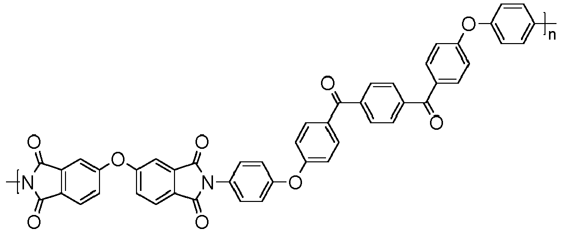 | 217 | 334 & 364 |
| LaRC-TPI | 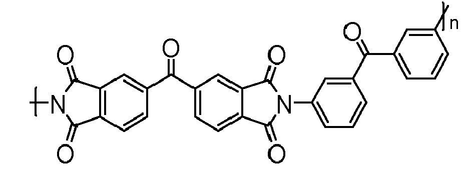 | 250 | 290-332 |
| New-TPI or Aurum | 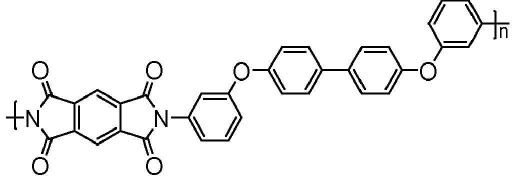 | 250 | 388 |
| TPEQ-ODPA | 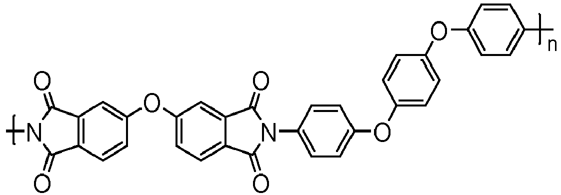 | 238 | 420 |

The polyimides shown in Table 2 are melt-processable. LaRC-TPI is melting but exhibits a high melt viscosity which challenges processing. This problem was solved by processing LaRC-TPI as copoly(imide/amic acid) material reducing the melt viscosity to towards processability. All polyimides shown in Table 2, however, exhibit insufficient thermal resistance. Having a *T*_{g} ≤ 250°C they cannot be used in high temperature applications.
1. Another approach applied was the introduction of an aromatic amide functionality. The aromatic amide functionality replaces a part of the imide groups yielding a class of materials called polyamideimides. A representative material of polyamideimides is Torlon (see
   Table ). Torlon exhibits a *T*_{g} at 276 °C and is a melt processable polymer that is injection mouldable. However the presence of the amide groups reduces the thermal stability of the polymer significantly compared to a polyimide containing only imide functionalities.

Another class polyimide materials used to gain melt processability are polyetherimides. A commercially available polyetherimide is ULTEM depicted in Table 3. ULTEM is amorphous structured and exhibits a *T*_{g} at 217 °C. This polymer is melt-processable by injection moulding extrusion and blow moulding. The melt processability is attributed to the presence of the flexible ether groups but also to the methyl groups of the bisphenol. However the methyl groups decrease the thermo-oxidative stability of the polymer compared to fully aromatic polymers.

**Table 3: Overview of melt-processable polyimides and their T_{g}.**

| **Name** | **Structure** | ***T*_{g} / °C** |
|---|---|---|
| Avimid N | 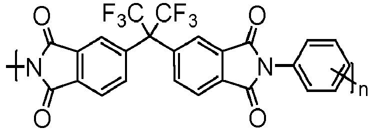 | 340-370 |
| Ethylene oxide containing polyimide | 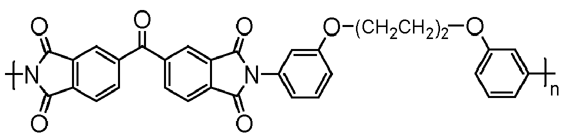 | 155 |
| BTDA+ 3,3'-DDS | 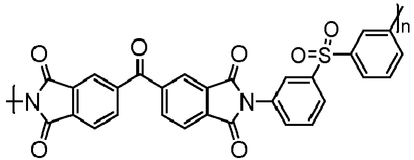 | 273 |
| BDSDA+ APB | 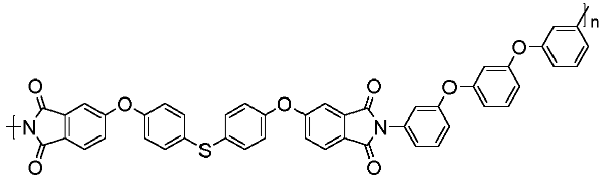 | 161 |
| IDPA+ 1,3-BABB | 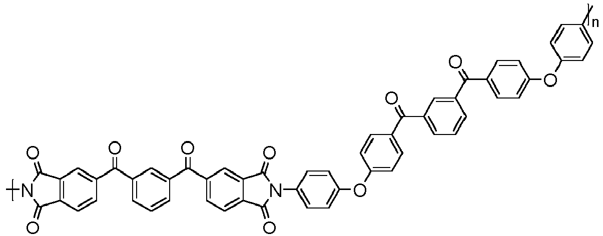 | 213 |
| BTDA+ 1,3-BABB | 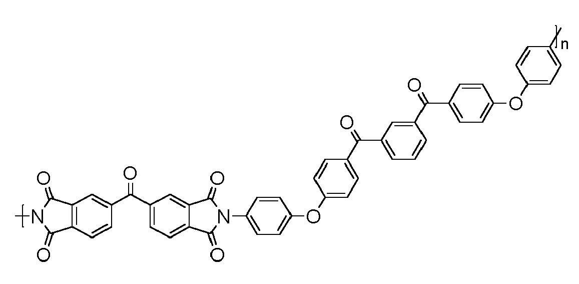 | 233 |
| Torlon | 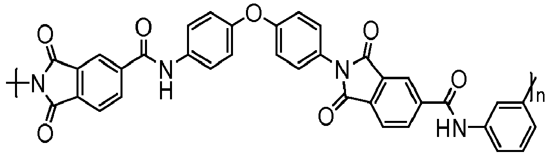 | 276 |
| ULTEM | 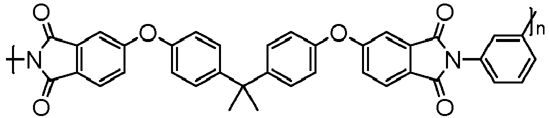 | 217 |

US 2008/0044684 discloses articles comprising a polyimide solvent cast film having a low coefficient of thermal expansion. According to US 2008/0044684 the polyimides exhibit only a short survivability at temperatures up to 260°C. No information regarding melt viscosity of the polyimides is provided.

US 2006/281840 A1 discloses a method of stabilization of polyetherimide sulfones being melt processable at temperatures of more than 250°C but does not disclose any polyimides being melt processable at temperatures of more than 290°C.

As shown above, even though many approaches have been tested, there is still a high demand in the market for melt processable polyimides with high thermal stability, in particular for polyimides that can be processed via injection molding and having a glass transition temperature T_{g} ≥ 290 °C.

Subject of the present invention, thus, was to provide new polyimides that are melt processable polyimides and show high thermal stability as well as to provide a process for their manufacturing.

Another preferred subject of the present invention was to provide polyimides and a process for their manufacture that can be processed via injection molding and having a glass transition temperature T_{g} ≥ 290 °C.

Another preferred subject of the present invention was to provide polyimides and a process for their manufacture that show high thermal stability and are melt processable without changing their color.

Another preferred subject of the present invention was to provide polyimides and a process for their manufacture that are melt processable and having a T_{g} ≥ 290 °C which can be adjusted over a broad range to provide high flexibility for intended use.

Another preferred subject of the present invention was to provide polyimides and a process for their manufacture that are melt processable under high processing temperatures, preferably up to 420°C, more preferred up to 390 to 400°C without relevant degradation of the polymer chain.

Further problems not explicitly mentioned before can be derived from the overall content of the subsequent description, examples, and claims.

The inventors surprisingly found out, that by grouping specific flexible and stiff units in polyimide polymers it was possible to obtain polyimides having a T_{g} ≥ 290 °C which are melt processable, in particular injection moldable. As stiff unit a unit having sulphone functionality was found to be best suitable to solve the problems of the invention. Inventors further found out that the structure of the unit having sulphone functionality having an impact on the thermal stability of the polyimides. While the problems of the invention have been solved by use of 4,4'-diaminodiphenylsulphone, use of 3,3'-diaminodiphenylsulphone lead to polyimides with T_{g} ≤ 290 °C. Also use of diamines with keto functionality as stiff unit, like 3,3'-Diaminobenzophenone and 4,4'-Diaminobenzophenone did result in polyimides with T_{g} ≤ 290 °C.

As diamines several ether-bridged aromatic diamines as claimed in claim 1 can be used as flexible units in the polyimides of the invention to solve the problems of the invention. The same is true with regard to the dianhydride units as claimed in claim 1. As will be shown in the examples below, variation of the composition of the polyimide by choosing the dianhydride unit and the flexible unit as well as by changing the molecular composition of the polyimides the thermal properties of the polyimides, in particular the T_{g} can be adjusted as required by the desired application.

It has further been found that thermal post-treatment of the inventive polyimides can effectively be used for further purification of the polyimides in needed. This provides another degree of flexibility with regard to the fields applications of the inventive polyimides.

TGA measurements of the inventive polyimides showed that no degradation of the polymer chain even at 450°C was observed. Thus, the inventive polyimides can by used even in high temperature processing processes.

Another degree of flexibility for the inventive polyimides is the use or non-use of end-cappers, which bond to terminal amino groups of the polymer chain. These end-cappers have an influence on the melt viscosity of the inventive polyimides. While polyimides without end-capper show increased melt viscosity in a second melt cycle compared to the first melt cycle, polyimides with end-cappers show constant melt viscosities in melted several times. This provides another degree of flexibility for the inventive polyimides.

Further benefits will be apparent from the subsequent description, examples, claims and figures.

### Detailed Description

Before describing the invention in more details, some important terms are defined as follows:
The verb "to comprise" as is used in the description, examples and the claims and its conjugation is used in its non-limiting sense to mean that items following the word are included, but items not specifically mentioned are not excluded. "Comprising" includes "consisting of" meaning that items following the word "comprising", are included without any additional, not specifically mentioned items, as preferred embodiment.

Reference to an element be the indefinite article "a" or "an" does not exclude the possibility that more than one of the elements is present, unless the context clearly requires that there is one and only one of the elements. The indefinite article "a" or "an" thus usually means "one or more".

Subject of the present invention are polyimides comprising building units (A) and (B) having the following structures (la) and (lb) 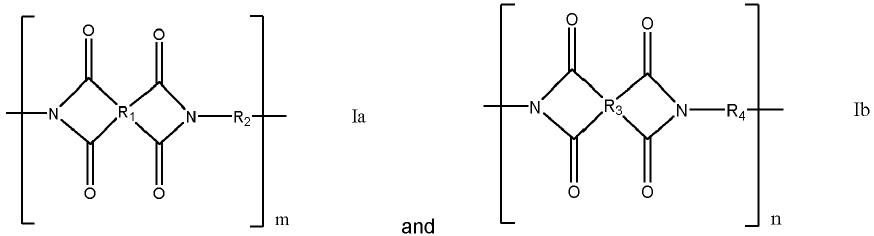
wherein R₁ comprises in total to an extent > 50 mol% of 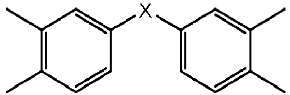
with X being selected from the group consisting of X₁, X₂, X₃, X₄ and mixtures thereof 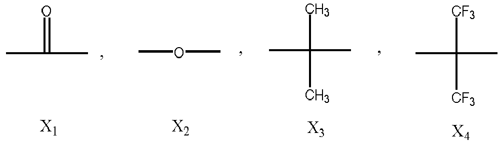
and wherein R₂ is 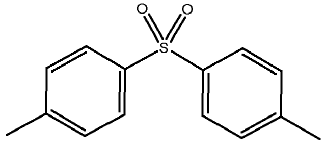
and wherein R₃ comprises in total to an extent > 50 mol% of 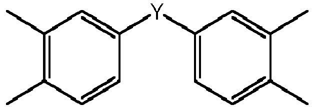
with Y being selected from the group consisting of Y₁, Y₂, Y₃, Y₄ and mixtures thereof 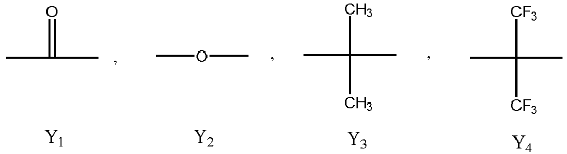
and wherein R₄ comprises in total to an extent > 50 mol% of R₄a, R₄b, R₄c, R₄d and mixtures thereof 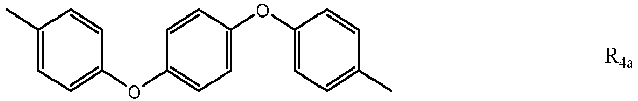 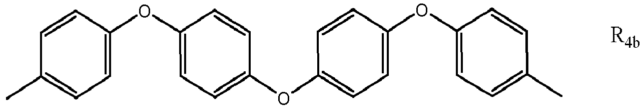 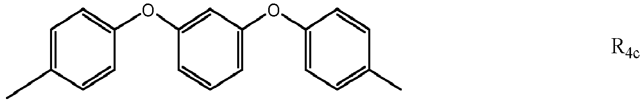 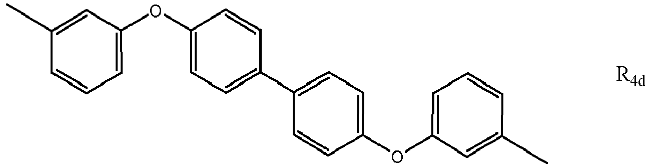
and wherein
R₁ and R₃ may be identical or different,
   - m =: 1 to 1000, preferably from 1 to 500, more preferably from 1 to 200, yet more preferably from 5 to 150, yet still more preferably from 10 to 100, yet still eve more preferably from 10 to 50 and most preferably from 10 to 40
   - n =: 1 to 1000, preferably from 1 to 500, more preferably from 1 to 200, yet more preferably from 1 to 150, yet still more preferably from 1 to 100, yet still eve more preferably from 1 to 50 and most preferably from 1 to 40,
and wherein
the molar ratio of R₂ to the sum of all R₄ units is in a range of from
   - 0.99 : 0.01 to 0.75 : 0.25 if R₄ is R₄ₐ or R_{4b} or R_{4c} or a mixture of two to four monomers selected from the group consisting of R₄ₐ, R_{4b}, R_{4c} and R_{4d},
      or
   - 0.99 : 0.01 to 0.8 : 0.2 if R₄ is R_{4d}
and wherein
the polyimide comprises end-capping units bound to free amino group of the polymer.

As will be demonstrated in the examples below the molar ratio of the stiff monomer R₂ to the flexible monomer R₄ has strong impact on the glass transition temperature of the polyimides. If the content of the stiff polymer R₂ is below 75% in combination with R₄ₐ or R_{4b} or R_{4c} respectively below 80 mol% in combination with R_{4d}, the T_{g} value of the polyimides decreases below 290°C. On the other hand, if no flexible monomer is present the resulting polyimides lack melt processability. Meaning the molar ratio of R₂ to the sum of all R₄ units can be varied in a range of from
- 0.99 : 0.01 to 0.75 : 0.25 to obtain inventive polyimides if R₄ is R₄ₐ or R_{4b} or R_{4c} or a mixture of two to four monomers selected from the group consisting of R₄ₐ, R_{4b}, R_{4c} and R_{4d},
   or
- in a range of from 0.99 : 0.01 to 0.8 : 0.2, if R₄ is R_{4d}.

Appropriate combination will be chosen by a man skilled in the art depending on the desired glass transition temperature of the resulting polyimide. Preferred molar ratios of R₂ to the sum of all R₄ units are in a range of from,
- 0.98 : 0.02 to 0.78 : 0.22 and more preferred of from 0.95 : 0.05 to 0.80 : 0.20 if R₄ is R₄ₐ or R_{4b} or R_{4c} or a mixture of two to four monomers selected from the group consisting of R₄ₐ, R_{4b}, R_{4c} and R_{4d}, or
- 0.99 : 0.01 to 0.8 : 0.2, preferably of from 0.98 : 0.02 to 0.81 : 0.19 and more preferred of from 0.95 : 0.05 to 0.82 : 0.18 if R₄ is R_{4d}.

If R₄ is R_{4c} further preferred ranges for the molar ratio of R₂ to R_{4c} are 0.99 : 0.01 to 0.81 : 0.19, preferably of from 0.98 : 0.02 to 0.81 : 0.19 and more preferred of from 0.95 : 0.05 to 0.82 : 0.18 if R₄ is R_{4c}.

Within the group of flexible monomer units R₄ₐ to R_{4d} it has been found that polyimides comprising R_{4c} and/or R_{4d} show best combinations of thermal resistance and melt processability. It is thus preferred, if R₄ comprises R_{4c} and/or R_{4d}.

Selection of monomer units R₁ has an impact on the glass transition temperature of the inventive polyimides, too. Analogue to the monomer units R₂ and R₄ the less flexible monomer unit R₁ with X = X₁ results in higher glass transition temperatures compared to more flexible monomer unit R₁ with X = X₂. It is preferred, if X = comprises X₁ or X₂ or a mixture of X₁ and X₂, preferably X comprises X₂.

In order to keep the complexity of the reaction and the number of monomers to be handled low, R₁ and R₃ are preferably identical. However, it is also possible to select R₁ and R₃ differently. Basically, the same principles apply to the selection of R₃ as to R₁. Selection of monomer units R₃ has an impact on the glass transition temperature of the inventive polyimides, too. Analogue to the monomer units R₂ and R₄ the less flexible monomer unit R₃ with Y = Y₁ results in higher glass transition temperatures compared to more flexible monomer unit R₃ with Y = Y₂. It is preferred, if Y = comprises Y₁ or Y₂ or a mixture of Y₁ and Y₂, preferably Y comprises Y₂.

R₁ may comprise further monomers selected from the group consisting of 3,3',4,4'-biphenyl-tetracarboxylic acid dianhydride, 2,3,3',4'-biphenyl-tetracarboxylic acid dianhydride, 2,2',3,3'-biphenyl-tetracarboxylic acid dianhydride, pyromellitic dianhydride, 3,4'-oxxydiphthalic anhydride and mixtures thereof in sum in an amount of from 0.01 to 50 mol%, preferably of from 0.1 to 30 mol%, more preferred of from 0.01 to 30 mol%, even more preferred of from 0.5 to 20 mol%, particular preferred of from 0.5 to 10 mol% and most preferred of from 0.5 to 5 mol%. Preferably R₁ comprises in total to an extent ≥ 70 mol%, more preferred to an extent ≥ 80 mol%, yet more preferred to an extent from 90 to 100 mol%, yet still more preferably to an extent from 95 to 100 mol% and most preferred to a 100 mol% extent of 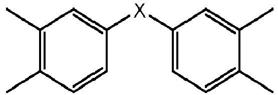 with X being selected from the group consisting of X₁, X₂, X₃, X₄ and mixtures thereof, preferably X being selected from X₁, X₂ and mixtures thereof, more preferred X being X₂.

R₃ may comprise further monomers selected from the group consisting of 3,3',4,4'-biphenyl-tetracarboxylic acid dianhydride, 2,3,3',4'-biphenyl-tetracarboxylic acid dianhydride, 2,2',3,3'-biphenyl-tetracarboxylic acid dianhydride, pyromellitic dianhydride, 3, 4'-oxxydiphthalic anhydride and mixtures thereof in sum in an amount of from 0.01 to 50 mol%, preferably of from 0.1 to 30 mol%, more preferred of from 0.01 to 30 mol%, even more preferred of from 0.5 to 20 mol%, particular preferred of from 0.5 to 10 mol% and most preferred of from 0.5 to 5 mol%. Preferably R₃ comprises in total to an extent ≥ 70 mol%, more preferred to an extent ≥ 80 mol%, yet more preferred to an extent from 90 to 100 mol%, yet still more preferred to an extent from 95 to 100 mol% and most preferred to a 100 mol% extent of 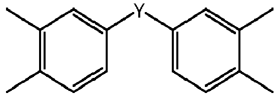 with Y being selected from the group consisting of Y₁, Y₂, Y₃, Y₄ and mixtures thereof, preferably Y being selected from Y₁, Y₂ and mixtures thereof, more preferred Y being Y₂.

Preferably R₄ comprises in total to an extent ≥ 65 mol%, preferably to an extent ≥ 80 mol%, more preferably to an extent from 90 to 100 mol%, yet more preferably to an extent from 95 to 100 mol% and most preferably to a 100 mol% extent of R₄ₐ, R_{4b}, R_{4c}, R_{4d} and mixtures thereof, preferably R_{4c}, R_{4d} and mixtures thereof, more preferred of R_{4c}. The remaining R₄ up to 100 mol% are preferably divalent spacers derived from diamines, preferably the spacers different from R₄ₐ, R_{4b}, R_{4c} and R_{4d} comprise aromatic units, more preferred are selected from the group consisting of R₄ₑ, R_{4f}, R_{4g} and R₄ₕ, with the formula 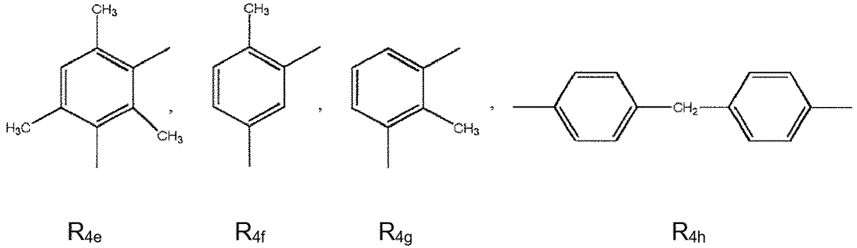 and divalent spacers derived from ether-linked aromatic diamines different from R₄ₐ, R_{4b}, R_{4c} and R4d.

The polyimide polymers of the invention may be random copolymers, meaning all monomers are mixed before polymerization is started and polymer chains without predefined monomer order are obtained. In this case m and n are preferably in the following ranges
- m =: 1 to 500, preferably from 1 to 200, yet more preferably from 1 to 150, yet still more preferably from 1 to 100, yet still eve more preferably from 5 to 50 and most preferably from 10 to 40
- n =: 1 to 200, preferably from 1 to 150, more preferably from 1 to 100, yet more preferably from 1 to 50, yet still more preferably 1 to 40 and most preferably from 1 to 20,

It is, however, also possible to prepare block-co-polymer, wherein the building units (A) and (B) each are building blocks (A) and (B) and wherein the block lengths n and m of blocks (A) and (B) are each from 1 to 1000, preferably from 1 to 500, more preferably from 1 to 200, yet more preferably from 5 to 150, yet still more preferably from 10 to 100, yet still even more preferably from 10 to 50 and most preferably from 10 to 40.

Best mechanical properties of the inventive polyimides have been found if
the molecular weight Mₙ of the polyimide according to the invention is in the preferred range from 10 000 to 200 000 g/mol, more preferred in the range from 15 000 to 150 000 g/mol, even more preferred in the range from 15 000 to 100 000 g/mol, particular preferred in the range of from 20 000 to 75 000 g/mol and most preferred in the range from 20 000 to 50 000 g/mol, and/or
if the molecular weight M_{w} of the polyimide is in the preferred range from 15 000 to 200 000 g/mol, more preferred in the range from 20 000 to 150 000 g/mol, even more preferred in the range from 25 000 to 100 000 g/mol, particular preferred in the range of from 30 000 to 95 000 g/mol and most preferred in the range from 35 000 to 90 000 g/mol.

It has been found that processability decreases if molecular weight is too high. If the molecular mass is too low brittleness of the inventive polyimides might be too high. Further benefits in terms of toughness, tensile strength and flexural strength have been found if the molecular mass is in the ranges defined above.

Most homogeneous properties of the inventive polymers have been found if polydispersity index D is of from 1 to 10, preferably 1.1 to 5, more preferably 1.2 to 4, yet more preferably 1.3 to 3 and most preferably 1.4 to 2.4. If the molecular mass distribution is smaller, a more homogeneous melt behavior was observed.

It has been found that inventive polymer produced from the building units (A) and (B) are melt processable, in particular are injection moldable, and have a T_{g} > 290°C. It has further been found that the melt viscosity of polymers comprising building units (A) and (B) but not end-cappers increases if the polymers are repeatedly melted or if the polymers are kept in melt over a longer period of time. Without being bond to any theory this behavior might be a result of the presence of active end groups in the polymer. Active end groups may be free amine moieties that were not reacted during polymerization or imidization. A temperature increase during melt processing induces a reaction of these end groups which seems to cause an increase of the viscosity. The more often the polymers are melted, the higher the melt viscosity is until all reactive groups have reacted.

To allow repeated heating of the inventive polymers or if heating over a very long period of time is needed, inventors have found out that increase of the melt viscosity of the inventive polymers can be avoided if the active end groups are capped with end-cappers. The end cappers are preferably mono-functional anhydrides that are added during or after polymerization to react with free amino groups of the polymer, i.e. free amine moieties that were not reacted during the PAA formation and cap these groups so that they are no longer reactive if the polymer is heat treated. The inventive polyimides thus comprise end-capping units bound to free amino group of the polymer, preferred end-capping units are mono-functional anhydride monomers without crosslinking functionality, more preferred mono-functional anhydride monomers selected from the group consisting of succinic anhydride, phthalic anhydride and its derivatives according to the following structure 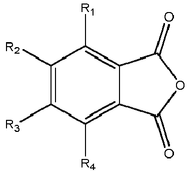 wherein two or three or all four of R₁, R₂, R₃ and R₄ may be identical or all four of R₁, R₂, R₃ and R₄ may be different and are preferably selected from the group consisting of H, methyl, ethyl, tert-butyl and phenyl, and mixtures thereof. The preferred mono anhydrides do not comprise crosslinking functionality to avoid increase of the melt viscosity.

As mentioned before the end-capping monomers, herein also named end-capping units or end-cappers, are preferably added during polymer synthesis. They can be added before or after addition of the dianhydride(s). More preferred the end-capping monomers are added as long as the polymer is in solution, i.e. before imidization takes place. If the end-cappers are added during polymer synthesis, it was observed that it is preferred that the amine and anhydride functionalities are stochiometrically balanced after end-capper addition. If addition of the end cappers leads to an excess of anhydride moieties, degradation of the polymer by disturbing the reaction equilibrium might be caused. This might result in a decrease of the molecular mass and the thermal stability. It is thus, preferred if the end-capper is comprised in an amount of ≤ 0.02 mol%, preferably 0.001 to 0.015 mol% and more preferred 0.002 to 0.01 mol %. Most preferred the end-capping units is present in an amount as defined before and simultaneously the sum of all anhydride functionalities is stochiometrically balanced with the sum of all amine functionalities. Stochiometrically balanced means a mole ratio of the sum of all anhydride functionalities to the sum of all amine functionalities is of from 0.9 : 1 to 1 to 0.9, preferably 0.95 : 1 to 1 to 0.95, more preferred 0.98 : 1 to 1 to 0.98 and most preferred 1 to 1.

The polyimides of the invention preferably comprise one or more additives selected from the group consisting of lubricants, preferably lithium stearate, graphite, metal sulfides, and polymer stabilizers, such as sterically hindered phenols or sterically hindered amines or phosphite esters.

The polyimides of the invention may be produced by a process comprising the steps
a. contacting one or more dianhydride(s) correlating to R₁ with 4,4'-diaminodiphenylsulphone and one or more diamines correlating to R₄ and, if R₁ is different from R₃, one or more dianhydride(s) correlating to R₃, to form a polyamic acid.
b. imidization of the polyamic acid obtained in step a,
wherein the molar ratio of 4,4'-diaminodiphenylsulphone to the sum of the diamines correlating to R₄ is in a range of from
- 0.99 : 0.01 to 0.75 : 0.25, preferably of from 0.98 : 0.02 to 0.78 : 0.22 and more preferred of from 0.95 : 0.05 to 0.80 : 0.20 if R₄ is R₄ₐ or R_{4b} or R_{4c} or a mixture of two to four monomers selected from the group consisting of R₄ₐ, R_{4b}, R_{4c} and R_{4d},
   or
- 0.99 : 0.01 to 0.8 : 0.2, preferably of from 0.98 : 0.02 to 0.81 : 0.19 and more preferred of from 0.95 : 0.05 to 0.82 : 0.18 if R₄ is R_{4d}.
and that
an end-capping unit that reacts with free amino group of the polymer is added before or during step a.

If R₄ is R_{4c} further preferred molar ratios of R₂ to R_{4c} are 0.99 : 0.01 to 0.81 : 0.19, preferably of from 0.98 : 0.02 to 0.81 : 0.19 and more preferred of from 0.95 : 0.05 to 0.82 : 0.18 if R₄ is R_{4c}.

In step a. it is preferred
that the diamine components are mixed and heated to the reaction temperature and the dianhydride components are added to the diamine components during heating or after the reaction temperature is reached,
   and/or
that the diamine components are dissolved in an aprotic dipolar solvent or a mixtures of aprotic dipolar solvents or a mixture of solvents comprising a aprotic dipolar solvent, preferably the aprotic dipolar solvents are selected from the group consisting of sulfolane, dimethylformamide, dimethylacetamide, N-methylpyrrolidinone, N-ethylpyrrolidinone, dimethylpropionamide, tetramethylurea, dimethylsulfoxide or mixtures thereof, and the dianhydride components are added to the solution of the diamine components during heating or after the reaction temperature is reached,
   and/or
step a. is carried out water free conditions and/or inert atmosphere,
   and/or
the reaction temperature in step a) is of from 0 to 40°C, preferably 3 to 30°C, more preferred 5 to 20°C and most preferred 10 to 15°C. Preferably the reaction solution is cooled during polymerization to control the reaction temperature and to avoid side reactions.

It is preferred to carry out step a underwater free conditions and/or inert atmosphere because water may cause an imbalance in the reaction stoichiometry, which may lead to a low molecular weight. Also the dianhydride is more likely to react with water forming orthodicarboxylic acid, which is not as reactive as the anhydride group.

To reduce potential risk of side reactions, it is preferred to conduct step a by adding the dianhydride monomers to the amine monomers as described before, even more preferred the dianhydride is added step by step during polymer growth. This leads to high molecular masses.

Preferably the sum of all anhydride moieties added in step a. is stoichiometric balanced to the sum of to the amine moieties added in step a.. This allows to obtain inventive polyimides with particularly high molecular mass. Stoichiometrically balanced means a mole ratio of the sum of all anhydride functionalities to the sum of all amine functionalities is of from 0.9 : 1 to 1 to 0.9, preferably 0.95 : 1 to 1 to 0.95, more preferred 0.98 : 1 to 1 to 0.98 and most preferred 1 to 1.

All known imidization methods can be used in step b. Preferably imidization can be affected thermally or chemically or by precipitation imidization or by combination of these methods, more preferably by heating the polyamic acid followed by colling to causes precipitation.

If step b. is carried out by chemical imidization it is preferred to affect the imidization by adding a base and a dehydrating agent to the polyamic acid, wherein the base is more preferably admixed in just a catalytic amount. It is further preferred to control the solid content of the polyamic acid solution to be in a range of from 15 to 30 % by weight, more preferred 20 to 27 % by weight. Even more preferred the solid content is adjusted before the base and the dehydrating agents are added. It has been found that the polyimide powder particles obtained at higher solid contents are too hard and that larger particles are obtained that melt slower than smaller particles.

For the reasons explained before the process of the invention comprises the step adding an end-capping unit that reacts with free amino group of the polymer, preferably a mono-functional anhydride monomer, more preferred a mono-functional anhydride monomer without crosslinking functionality, even more preferred a mono-functional anhydride monomer selected from the group consisting of succinic anhydride, phthalic anhydride and its derivatives according to the following structure 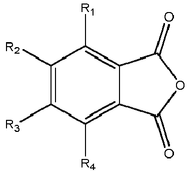 wherein two or three or all four of R₁, R₂, R₃ and R₄ may be identical or all four of R₁, R₂, R₃ and R₄ may be different and are preferably selected from the group consisting of H, methyl, ethyl, tert-butyl and phenyl, and mixtures thereof, before or during step a., preferably in an amount of ≤ 0.02 mol%, more preferred 0.001 to 0.015 mol%, even more preferred 0.002 to 0.01 mol %, most preferred the mono-functional anhydride monomer as end-capper is present in an amount as defined before and simultaneously the sum of all anhydride functionalities is stoichiometrically balanced with the sum of all amine functionalities.

It is further preferred that the process of the invention comprises an additional step c. isolating the polyimide. To remove impurities from the polyimides, it is preferred that step c. comprises the following steps, precipitating the polyimide and separating the precipitate from the solvent, more preferred followed by washing the precipitate and drying.

It has been found that a small particle size of the polyimide powder is beneficial for melt extrusion application. Smaller particles have a larger surface. A larger surface allows better heat transfer and leads to shorter melt times. It is thus, preferred that the particles having an average particle size of from 10 to 250 microns. It is further preferred to adjust the average particle size by stirring the reaction mixture during precipitation or by applying shear forces during or after precipitation.

For the reasons mentioned before it is also preferred to conduct an additional step d. grinding of the polyimide obtained in step b. or c. Step d. can be carried out as alternative to stirring or the application of shear forces or in addition to said measures.

Inventors found out that inventive polyimides may comprise impurities even if step c. is carried out. Such impurities may cause gas formation during melt processing at higher temperatures because of thermal degradation of these impurities. This effect can be beneficial if melt extruded products with a lower density are to be produced. If, however, the gas formation needs to be avoided or reduced, meaning gas forming impurities need to be removed from the inventive polyimides, this can be done in an additional step e. heating the polyimide to a temperature above its T_{G}. It has been found that impurities can be even better removed if step e. is carried out under reduced pressure.

The inventive polyimide can be used in any typical application for high-temperature resistant polyimides, in particular in melt-extrusion, injection molding, direct forming and hot-compression molding processes, most preferably melt-extrusion and injection molding.

### Methods of measurement:

TGA (thermogravimetric analysis) and DSC (differential scanning calorimetry) measurements were carried out with a TGA TA instruments Q5000 and a DSC TA instruments Q2000 both equipped with an autosampler. The DSC measurements were carried out under nitrogen.

### Determination of glass transition temperature T_{g} and Tₘ

T_{G} and Tₘ were measured using DSC TA instruments Q2000 both equipped with an autosampler.

### Determination of molecular weight M_{w} and Mₙ

Molar mass is determined by gel permeation chromatography. Calibration is against polystyrene standards. The molar masses reported are thereto formed to be understood as relative molar masses.

**Table 4: Components and settings used were as follows:**

| | |
|---|---|
| HPLC | WATERS 600 pump, 717 autoinjector, 2487 UV detector |
| Precolumn | PSS SDV precolumn |
| Columns | PSS SDV 10 µm 1000, 10⁵ and 10⁶ Å |
| Mobile phase | 0.01M LiBr + 0.03M H₃PO₄ in DMF (sterile-filtered, 0.45 µm) |
| Flow | 1.0 ml/min |
| Run time | 45 min |
| Pressure | ~1550 psi |
| Wavelength | 270 nm (with use of UV detector) |
| Injection volume | 50 µl or 20 µl (for solutions c >1 g/l) |
| Standards | PS(polystyrene) standards (narrow distribution, 300 - 3·10⁶, PSS) |

### Determination of dispersity (D)

The dispersity D of the polymer is the quotient M_{w} / Mₙ. The molar masses are relative molar masses based on polystyrene standards.

### Determination of degree m or n of polymerization

The degree of polymerization is a purely arithmetic quantity and is obtained from the molar ratio of the monomers used.

### Examples

The examples which follow serve to provide more particular elucidation and better understanding of the present invention, but do not limit it in any way.

### Monomers used

### Mono functional anhydride

Phthalic anhydride was obtained from TCI

### Di functional anhydrides

BTDA: Benzophenone-3,3',4,4'-tetracarboxylic dianhydride was obtained from Jayhawk Fine Chemicals Corporation
ODPA: 4,4'-Oxydiphthalic anhydride was obtained from Jayhawk Fine Chemicals Corporation
6FDA: 4,4'-(hexafluoroisopropylidene)diphthalic anhydride was obtained from Daikin Chemicals

### Diamines

- 4,4'DDS :: 4,4'-diaminodiphenylsulphone, obtained from TCI
- RODA :: 1,3-Bis (4-aminophenoxy) benzene, obtained from TCI
- TPEQ:: 1,4-bis(4-aminophenoxy)benzene, obtained from TCI
- BDA:: 4,4'-Bis(4-aminophenoxy)diphenyl ether, prepared as shown below
- BABI:: 4,4'-Bis(3-aminophenoxy) biphenyl, prepared as shown below

### Synthesis of Bisf4-(4-nitrophenoxy)phenyll ether

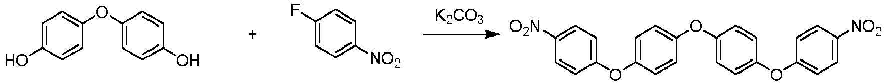

4,4'-oxydiphenol (9.30 g, 46.0 mmol) was dissolved in 160 mL DMAc. Then finely grinded, dry K₂CO₃ (14.11 g, 102.1 mmol) and 160 mL toluene were added. The suspension was stirred under argon at 135 °C for 1.5h and then the temperature was increased to 175 °C. Meanwhile water is collected via a Dean-Stark trap and removed with the toluene from the system. The dark suspension was afterwards cooled to room temperature, 1-fluoro-4-nitrobenzene (16.36 g, 115.9 mmol) was added, and the reaction mixture heated to 160 °C over night. After cooling to room temperature 400 mL water were added and the product was extracted with 400 mL DCM. The organic phase was washed with water and dried with MgSO₄. The solvent was removed, and the product recrystallized in acetone/EtOH (50/50). Drying in vacuum over CaCl₂ yielded Bis[4-(4-nitrophenoxy)phenyl] ether (14.91 g, 33.56 mmol, 73%).

¹H-NMR (300 MHz, CDCl₃) δ/ ppm: 8.22 (d, 4H, J= 9.3 Hz), 7.10 (s, 8H), 7.04 (d, 4H, J= 9.3 Hz). ¹³C-NMR (75 MHz, CDCl₃) δ / ppm: 163.3, 154.5, 150.3, 142.7, 126.1, 122.2, 120.5, 116.9. FT-IR v/cm⁻¹: 3114, 1584, 1484, 1371, 1341, 1259, 1222, 1188, 1162, 1109, 950, 839, 770, 747, 684.

HRMS (ESI, positive): m/z calculated for C₂₄H₁₆N₂O₇ 444.0958, found 445.1012 [M+H]⁺

### Synthesis of 4,4'-Bis(4-aminophenoxy)diphenyl ether (BDA)

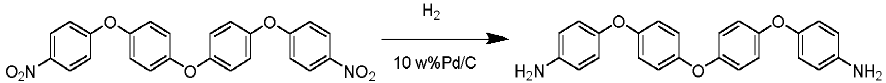

Bis[4-(4-nitrophenoxy)phenyl] ether (9.33, 21.0 mmol) was dissolved in 100 mL dry THF in a hydrogenation bottle. 0.90 g (8.45 mmol) of 10 % Pd/C were added and the bottle was placed in a Parr hydrogenator. 0.53 MPa Hz were adjusted, and the reaction was performed over night. Then the mixture was filtered over a celite patch, and the solvent removed. The product was recrystallized in EtOH to yield BDA as a beige solid (6.53 g, 16.99 mmol, 81 %)

¹H-NMR (300 MHz, CDCl₃) *δ*/ ppm: 6.91 (m, 8H), 6.87 (d, 4H, J = 8.8 Hz), 6.68 (d, 4H, *J* = 8.8 Hz), 3.56 (s, 4H).

¹³C-NMR (75 MHz, DMSO-d₆) *δ* / ppm: 154.4, 151.7, 146.1, 145.3, 120.5, 119.6, 118.0, 114.8. FT-IR *v* / cm⁻¹: 3559, 3385, 3315, 1879, 1615, 1489, 1322, 1275, 1191, 1098, 1009, 938, 825, 800, 747, 699.

HRMS (ESI, positive): *m*/*z* calculated for C₂₄H₂₀N₂O₃ 384.1474, found 385.1550 [M+H]⁺

### Synthesis of 4,4'-Bis(3-aminophenoxy) biphenyl (BABI)

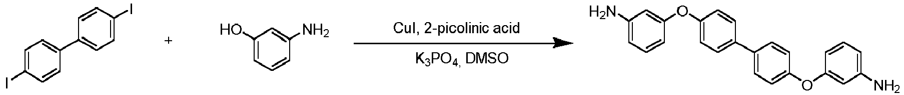

4,4'-diiodobiphenyl (7 g, 17.24 mmol), 3-aminphenol (9.03 g, 82.76 mmol), 2-picolinic acid (0.21 g, 1.72 mmol), copper(I) iodide (0.16 g, 0.86 mmol) and potassium phosphate (7.32 g, 34.48 mmol) were weighed under argon in a Schlenk tube. Dry DMSO (43 mL) was added, and the reaction mixture was stirred at 80 °C over night. The product was extracted with EtOAc and washed with water and a K₂CO₃ solution. The organic phase was washed with water until pH= 7 was reached. After drying with MgSO₄, the solvent was removed, and the obtained crude product was hot steam extracted with heptane. The precipitates from heptane as white solid, which was isolated by filtration, washed with heptane and dried in vacuum at 70 °C. The obtained white solid was additionally purified by column chromatography (EtOAc/heptane).

¹H-NMR (300 MHz, DMSO-d₆) *δ* / ppm: 7.63 (d, 4H, *J* = 8.9 Hz), 6.98-7.05 (m, 6H), 6.32-6.36 (m, 2H), 6.16-6.22 (m, 4H).

¹³C-NMR (75 MHz, DMSO-d₆) *δ* / ppm: 157.5, 156.3, 150.5, 134.4, 130.1, 127.8, 118.9, 109.4, 106.0, 103.9.

FT-IR v/cm⁻¹: 3404, 3311, 3210, 3040, 3011, 1587, 1465, 1327, 1286, 1235, 1166, 1133, 1073, 994, 962, 855, 830, 773, 685.

HRMS (ESI, positive): *m*/*z* calculated for C₂₄H₂₀N₂O₂ 368.1525, found 369.1718 [M+H]⁺

### Example 1: Polyimides without end cap

In step a) a polyamic acid was prepared under nitrogen and by using a mechanical stirrer, by dissolving the diamines listed in Tables 6 to 11 were in DMF and adding the dianhydrides and optionally monoanhydrides listed in Tables 6 to 11 to the solution in portions and stirring the reaction mixture over night at room temperature. The monomer amount was adjusted for a 15% solid content.

In step b) imidization was achieved in three different ways, dependent on the diamine monomer used.

### Thermal imidization

For the thermal imidization a small amount of PAA was drop casted on a clean glass substrate and heat treated in an oven under air using the temperature program described in Table 5. The resulting film was removed by immersing the substrate into water.

**Table 5: Temperature program applied for thermal imidization.**

| **Duration** | **Temperature / °C** |
|---|---|
| 1h at | 80 |
| 1h at | 150 |
| over night | 250 |

### Precipitation imidization

The imidization reaction takes place in a three-neck round bottom flask which is equipped with mechanical stirrer, a nitrogen inlet and a column, which is packed with glass Raschig Rings. A column head is placed on the top of the column for controlling solvent reflux. 200 mL DMF with 2 g (20.4 mmol) phosphoric acid were heated to reflux until constant temperature was reached. Then the PAA was added dropwise to the solvent mixture. During PAA addition, condensate was collected via the column head in the same rate as the addition of the PAA takes place. After addition was completed, the reaction mixture was refluxed for another 2h. The resulting precipitate was filtered, washed with water and dried at 160 °C over night.

### Chemical imidization

Acetic anhydride (2.4 equ. of the amount of dianhydride) and pyridine (4.8 eq. of the amount of dianhydride) were added dropwise as a mixture to the PAA. After addition the PAA was stirred under nitrogen over night.

If a precipitate had formed, it was collected via filtration washed with 0.5 L DMF, 3 L water and 0.5 L EtOH. The polymer was dried over night in the vacuumed desiccator over CaCl₂, then finely grinded and again dried in vacuum at 150 °C for three days.

If no precipitate was formed over night, the polymer was precipitated in water and finely grinded. The polymer washing and drying was performed as described previously.

The following inventive polyimides (IPI) were prepared (Tₘs were detected in the first run and T_{g}s were detected in second run of the DSC measurement):

**Table 6: Polyimide made from ODPA as dianhydride and TPEQ and 4,4'-DDS as diamines. Table shows molar composition of the amine mix as well as SEC and DSC results for the segmented polymers**

| 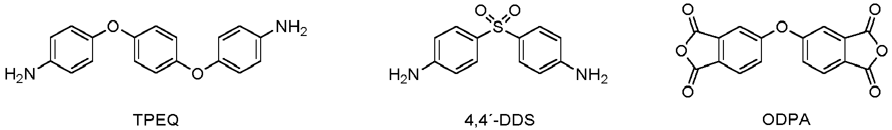 | | | | | | | |
|---|---|---|---|---|---|---|---|
| | **TPEQ** | **4,4'-DDS** | ***M*ₙ/ kDa** | ***M*_{w}/ kDa** | **Ð** | ***T*_{g}^{*}/ °C** | ***T*ₘ^{*}/ °C** |
| CPI 9 | 0.05 | 0.95 | 46.6 | 83.6 | 1.8 | 317 | 360 |
| CPI10 | 0.1 | 0.9 | 43.9 | 77.5 | 1.8 | 315 | 361 |
| CPI11 | 0.15 | 0.85 | 41.4 | 72.0 | 1.7 | 313 | 362 |
| CPI12 | 0.2 | 0.8 | 40.6 | 70.6 | 1.7 | 304 | 367 |

### Example 2: Inventive and non-inventive polyimides with end cap

Polymers were prepared as shown in Example 1 with the modification that all polymers were endcapped with, preferably an amount of 0.01 mol, phthalic anhydride (stochiometrically balanced with the dianhydride moiety), which was added during step a) to cap free amino group at the ends of the polymer chains of the polymer back bone.

The following inventive polyimides (IPI) and comparative, non-inventive polyimides (CPI) were prepared (*T*ₘs were detected in the first run and *T*_{g}s were detected in second run of the DSC measurement):

**Table 7: Polyimide made from ODPA as dianhydride and TPEQ and 4,4'-DDS as diamines with phthalic anhydride as endcapper. Table shows molar composition of the amine mix, amount of endcapper.**

| 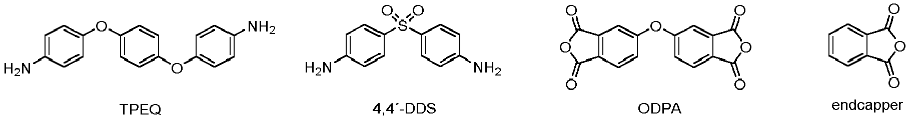 | | | | | | | | |
|---|---|---|---|---|---|---|---|---|
| | **End-capper** | **TPEQ** | **4,4'-DDS** | ***M*ₙ/ kDa** | ***M*_{w}/ kDa** | **D** | ***T*_{g}^{*}/ °C** | ***T*ₘ^{*}/ °C** |
| IPI 5 | 0.01 | 0.05 | 0.95 | 34.2 | 50.9 | 1.5 | 310 | 358 |
| IPI 6 | | 0.1 | 0.9 | 36.0 | 55.2 | 1.5 | 310 | 361 |
| IPI 7 | | 0.15 | 0.85 | 35.9 | 54.9 | 1.5 | 304 | 360 |
| IPI 8 | | 0.2 | 0.8 | 32.5 | 50.0 | 1.5 | 297 | 362 |
| CPI 1 | | 0.3 | 0.7 | 53.0 | 89.0 | 1.7 | 281 | 380 |
| CPI 2 | | 0.5 | 0.5 | 32.8 | 51.3 | 1.6 | 264 | 392 |

**Table 8: Polyimide made from BTDA as dianhydride and TPEQ and 4,4'-DDS as diamines with phthalic anhydride as endcapper. Table shows molar composition of the amine mix, amount of endcapper.**

| 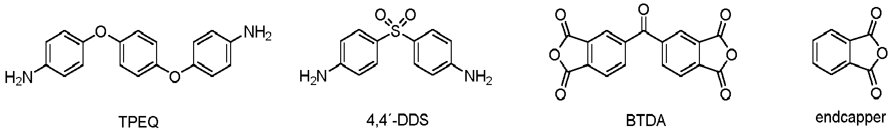 | | | | | | | | |
|---|---|---|---|---|---|---|---|---|
| | End-capper | TPEQ | 4,4'-DDS | *M*ₙ/ kDa | *M*_{w}/ kDa | D | *T*_{g}^{*}/ °C | *T*ₘ^{*}/ °C |
| IPI9 | 0.01 | 0.1 | 0.9 | 48.5 | 74.4 | 1.5 | 324 | 348 |

**Table 9: Polyimide made from ODPA as dianhydride and BDA and 4,4'-DDS as diamines with phthalic anhydride as endcapper. Table shows molar composition of the amine mix, amount of endcapper.**

| 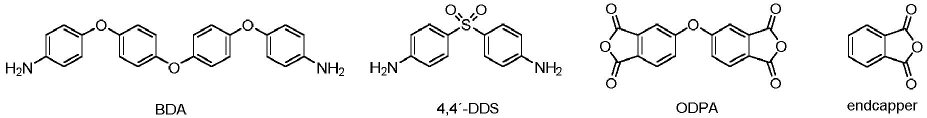 | | | | | | | | |
|---|---|---|---|---|---|---|---|---|
| | **End-capper** | **BDA** | **4,4'-DDS** | ***M*ₙ/ kDa** | ***M*_{w}/ kDa** | ***Ð*** | ***T*_{g}^{*}/ °C** | ***T*ₘ^{*}/ °C** |
| IPI 10 | 0.01 | 0.05 | 0.95 | 27.0 | 43.0 | 1.6 | 315 | 351 |
| IPI 11 | | 0.1 | 0.9 | 31.0 | 48.0 | 1.5 | 308 | 344 |
| IPI 12 | | 0.15 | 0.85 | 31.0 | 47.0 | 1.5 | 314 | 354 |
| IPI 13 | | 0.2 | 0.8 | 24.0 | 47.0 | - | 308 | 358 |
| CPI 3 | | 0.3 | 0.7 | 37.1 | 55.6 | 1.5 | 269 | 267 |

**Table 10: Polyimide made from ODPA as dianhydride and RODA and 4,4'-DDS as diamines with phthalic anhydride as endcapper. Table shows molar composition of the amine mix, amount of endcapper.**

| 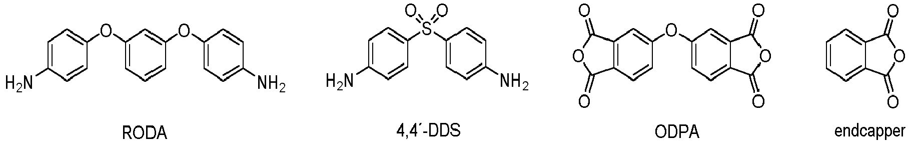 | | | | | | | | |
|---|---|---|---|---|---|---|---|---|
| | **End-capper** | **RODA** | **4,4'-DDS** | ***M*ₙ/ kDa** | ***M*_{w}/ kDa** | ***Ð*** | ***T*_{g}^{*}/ °C** | ***T*ₘ^{*}/ °C** |
| IPI 14 | 0.01 | 0.05 | 0.95 | 30.0 | 46.0 | 1.5 | 314 | 363 |
| IPI 15 | | 0.1 | 0.9 | 34.2 | 51.3 | 1.5 | 306 | 386 |
| IPI 16 | | 0.15 | 0.85 | 32.0 | 51.0 | 1.6 | 297 | 380 |
| IPI 17 | | 0.2 | 0.8 | 34.0 | 55.0 | 1.6 | 291 | 387 |
| CPI 4 | | 0.3 | 0.7 | 26.8 | 50.4 | 1.9 | 281 | 363 |
| CPI 5 | | 0.5 | 0.5 | 31.0 | 62.3 | 2.0 | 254 | 243 |

**Table 11: Polyimide made from ODPA as dianhydride and BABI and 4,4'-DDS as diamines with phthalic anhydride as endcapper. Table shows molar composition of the amine mix, amount of endcapper.**

| 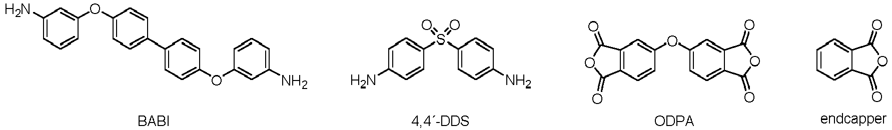 | | | | | | | | |
|---|---|---|---|---|---|---|---|---|
| | **End-capper** | **BABI** | **4,4'-DDS** | ***M*ₙ/ kDa** | ***M*_{w}/ kDa** | ***D*** | ***T*_{g}^{*}/ °C** | ***T*ₘ^{*}/ °C** |
| IPI 18 | 0.01 | 0.1 | 0.9 | 27.7 | 37.8 | 1.4 | 301 | 337 |
| IPI 19 | | 0.2 | 0.8 | 29.1 | 42.2 | 1.5 | 290 | 350 |
| CPI 6 | | 0.25 | 0.75 | 32.0 | 45.2 | 1.4 | 268 | - |
| CPI 7 | | 0.3 | 0.7 | 27.5 | 38.5 | 1.4 | 268 | 271 |
| CPI 8 | | 0.5 | 0.5 | 33.3 | 48.8 | 1.5 | 247 | 263 |

The results shown in Tables 7 to 11 show that all inventive polyimides (IPI), having a content of 4,4'DDS of minimum 80 mol% of the amine mix, show high thermal restistance and solve the problem of the invention to provide a T_{g} of equal than or higherthan 290°C. In contrast thereto the comparative polyimides (CPI) show that T_{g} decreases below 290°C if the 4,4'DDS content of the amine mix is below 80 mol%. Comparison of inventive examples IPI 6 and IPI 9 shows that use of BTDA instead of ODPA leads to slightly higher T_{g} and that the selection of the dianhydride component can be used to adapt the T_{g}. Comparison of examples CPI 9 to 11 with inventive examples IPI 5 to 8 shows that use of an end-capper has minor effect on T_{g}. Measurement of melt viscosity, however showed that the polyimides without end capper showed a higher viscosity in a second melt cycle compared to the first melt cycle while inventive polyimides with end-capper show consistent melt viscosities even if melted several times.

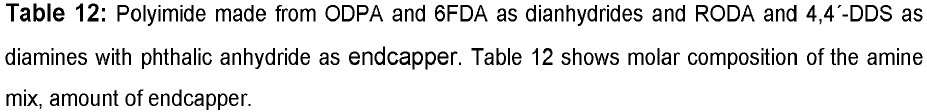

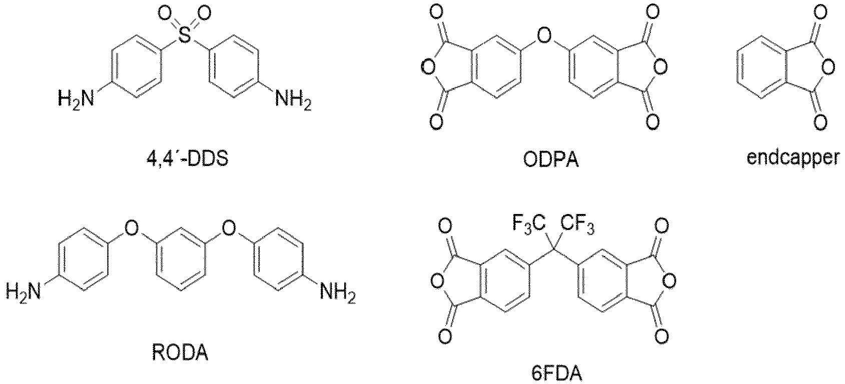

In a 500 ml flask, 29.796 g / 0.12 mol of bis(4-aminophenyl) sulfone (4,4'-DDS) and 8.77 g / 0.03 mol of 1,3-bis(4-aminophenoxy)benzene (RODA) were dissolved in 257 g DMF. Then, 0.222 g / 0.0015 mol of Phthalic anhydride, 23.033 g / 0.0743 mol of 4,4'-oxydiphthalic anhydride (ODPA) and 33.315 g / 0,075 mol of 4,4'-(hexafluoroisopropylidene)diphthalic anhydride (6FDA) were stepwise added to the cooled (15°C) reaction solution.

Preparation of PAA as well as chemical imidization were carried out as described previously.

| | **End-capper** | **ODPA** | **6FDA** | **RODA** | **4,4'-DDS** | ***M*ₙ/ kDa** | ***M*_{w}/ kDa** | ***D*** | **T_{g}^{*}/ °C** | ***T*ₘ^{*}/ °C** |
|---|---|---|---|---|---|---|---|---|---|---|
| IPI20 | 0.01 | 0.495 | 0.5 | 0.2 | 0.8 | 36.6 | 53.0 | 1.45 | 312 | |

Table 12 shows that it is possible to use mixed dianhydrides selected from the dianhydrides claimed in claim 1 as starting material.

**Table 13: Polyimide made from ODPA as dianhydride and RODA and 4,4'-DDS as diamines with increased amounts of phthalic anhydride as endcapper. IPI17 was repeated with increased amounts of endcappers. Table 13 shows molar composition of the amine mix, amount of endcapper.**

| | **End-capper** | **ODPA** | **RODA** | **4,4'-DDS** | ***T*_{g}^{*}/ °C** |
|---|---|---|---|---|---|
| IPI21 | 0.02 | 0.990 | 0.2 | 0.8 | 292 |
| IPI22 | 0.025 | 0.9875 | 0.2 | 0.8 | 290 |

Table 13 shows that even with increased amounts of endcappers Tg remains above 290°C.

### Example 3: rheological measurements of the polyimides

Rheological measurements of the comparative polyimides CPI 9 to 12 show that these polyimides are melt processable. After repeating the measurement in a second melt cycle the polymers show a higher viscosity compared to the viscosity measured in the first melt cycle but the polymers are still melt-processable. Thus, the polyimides can be used for injection molding applications if the number of melt cycles is low respectively if the melting time is short.

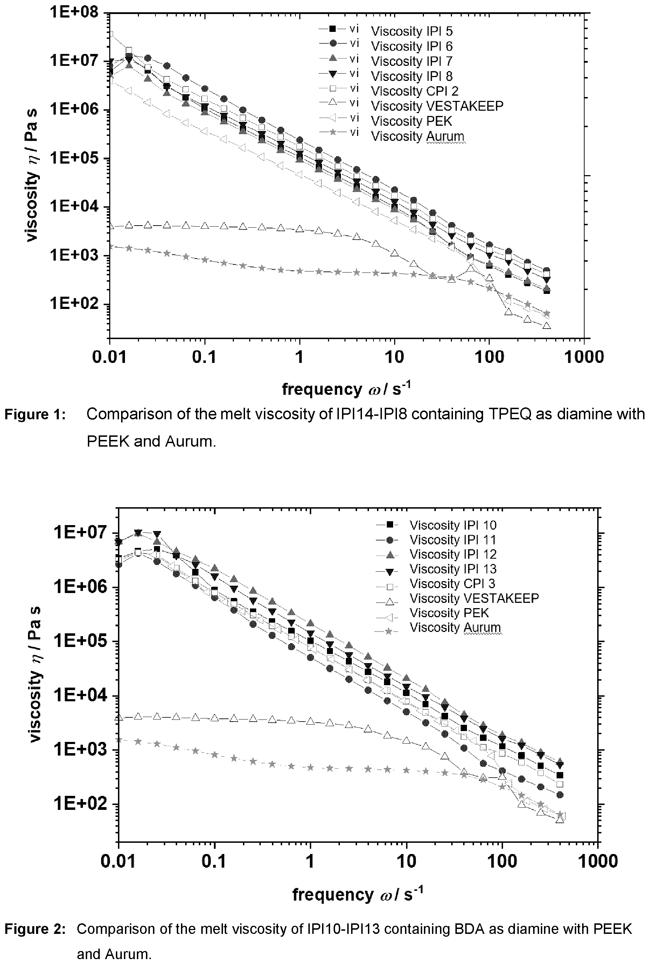

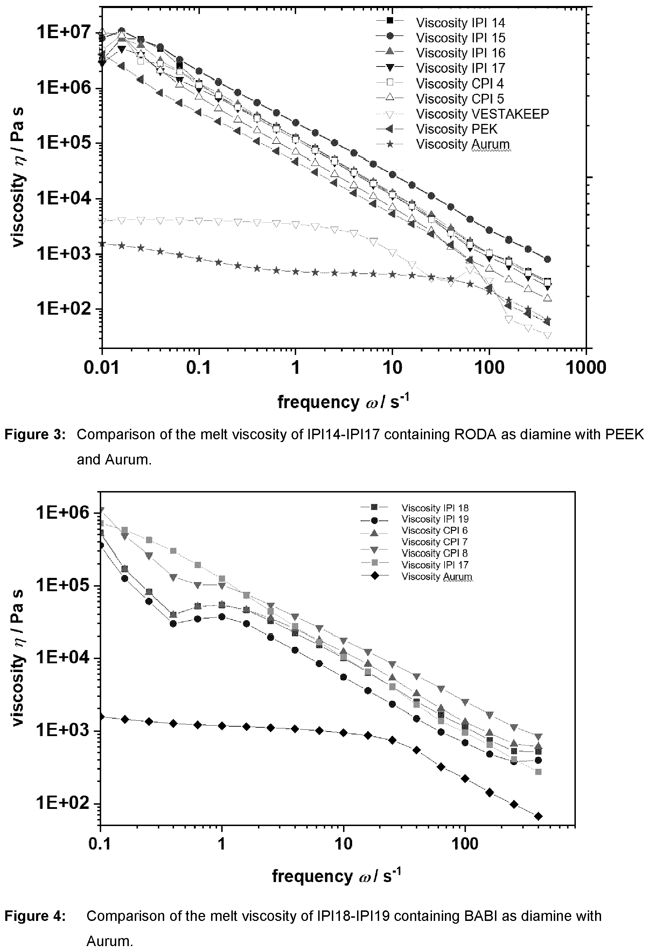

Figures 1 to 4 show that inventive polyimides IPI 5 to 8 and 10 to 19 are meltable, too. In contrast to CPI 9 to 12, no increase in the viscosity was found in these end capped polymers if viscosity measurements were repeated. Thus, the inventive polyimides, which comprise endcappers, can be used in injection molding applications with low and high number of melt cycles as well as in applications which require a longer time where the polymer is melted.

Figures 1 to 4 show a comparison to commercially available polymers PEEK and Aurum, which show lower melt viscosities at lower frequencies, but cannot be used in high temperature applications because of their T_{g} of only 143°C respectively 250 °C

### Example 4: Melt Flowability

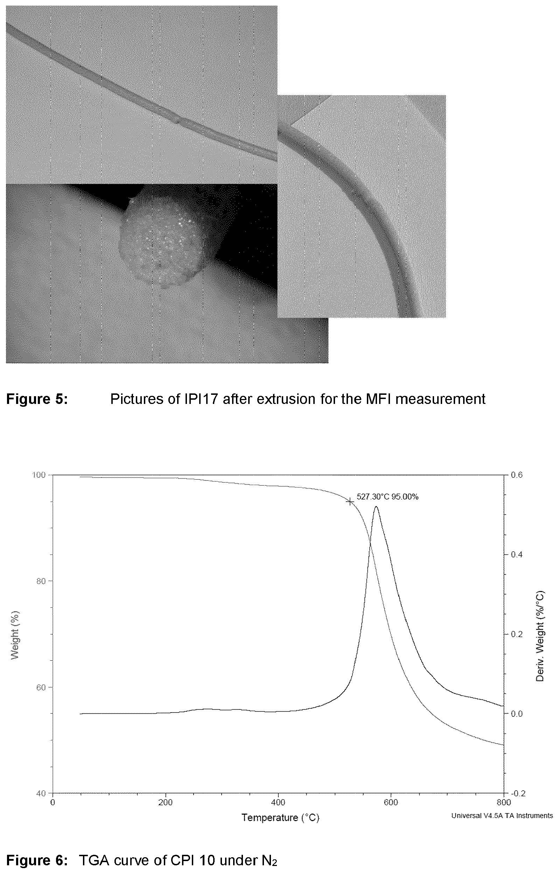

The melt flowability was determined via melt flow index (MFI) measurements. Inventive polymer IPI 17 was selected for the testing. The MFI measurement was performed at 400 °C and showed that the polymer is extrudable. IPI 17 showed sufficiently good flowability to be extruded from the device as shown in Figure 5. The extrudable polymer IPI 17 did not suffer under the high temperature since the colour remained unchanged. However, bubble formation was visible in the extruded IPI 17 which is due to the evolution of gas formed by decomposition of impurities present in the polymer. For this reason, the MFI value and the melt volume index (MVI) presented in Table14 are shown in a range.

**Table 14:**

| **IPI17 (20** % **RODA** + **80** % **4,4'-DDS)** | **MVI** / **cm³ 10 min⁻¹** | **MFI / g 10 min⁻¹** |
|---|---|---|
| 1. measurement | 17.7-24.5 | 22.0 - 30.4 |
| 2. measurement | 14.9 - 22.7 | 18.5 - 28.2 |
| standard deviation / cm³ 10 min⁻¹ | 2.27 | 2.63 |
| coefficient of variation / % | 9.87 | 12.66 |

With the MFI results can be said that IPI 17 is processable from the melt and has a high *T*_{g} of 290 °C. The gas formation can be useful if less dense extruded goods are desired.

If more dense products are needed, it was found that gas evolution during extrusion could be minimized or avoided if the polyimide was heat treated before extrusion at temperatures over the *T*_{g} preferably under vacuum, since chain movement is increased at this temperature allowing the impurity to be removed.

### Example 5: TGA measurements

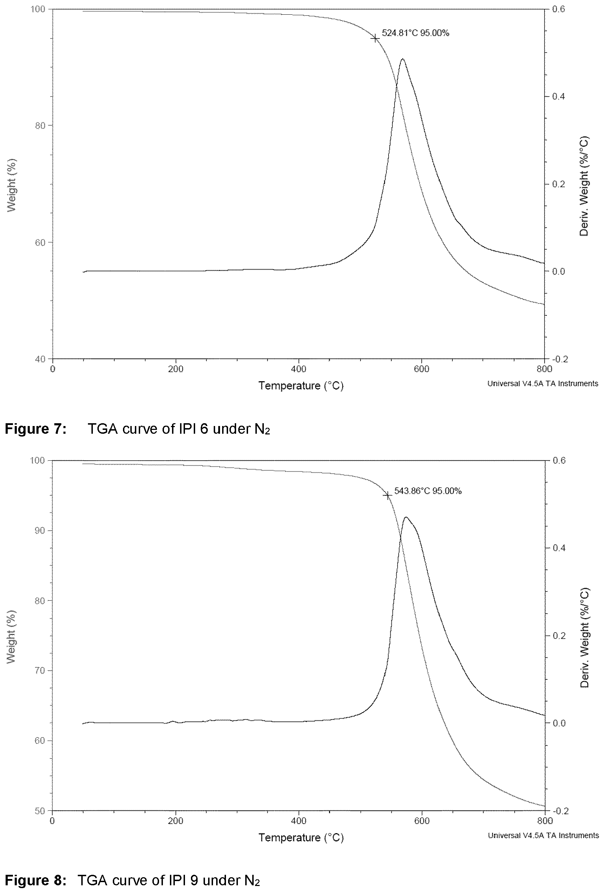

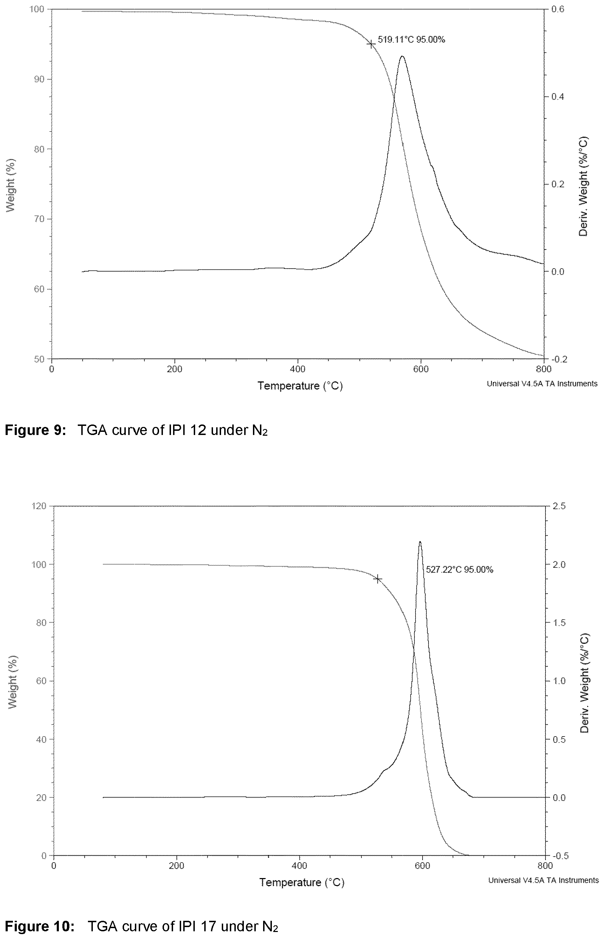

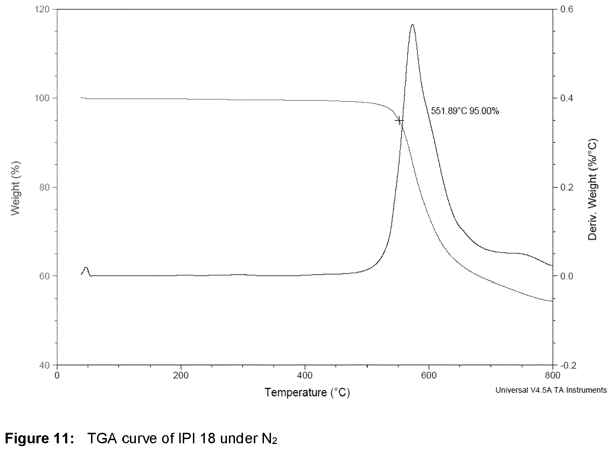

Figures 6 to 11 exemplarily show the results of TGA measurements for CPI 10 and inventive polyimides IPI 6, 9, 12, 17 and 18. The TGA measurements confirmed that no chain degradation of the inventive polyimides occurs even at temperatures up to 450°C.

### Comparative Example

The polyimide from Example 39 of US 2008/0044684 A1 was reproduced. Table 15 shows molar composition of the amine mix as well as SEC and DSC results for the segmented polymers

| | **End-capper** | **ODPA** | **RODA** | **4,4'-DDS** | ***M*ₙ/ kDa** | ***M*_{w}/ kDa** | ***D*** | **T_{g}^{*}/ °C** | ***T*ₘ^{*}/ °C** |
|---|---|---|---|---|---|---|---|---|---|
| CPI13 | 0.00 | **1.0** | 0.2 | 0.8 | 35.1 | 50.7 | 1.44 | 278 | - |

CPI13 does have T_{g} clearly below 290°C.

## Claims

1. Polyimide comprising building units (A) and (B) having the following structures (la) and (Ib) 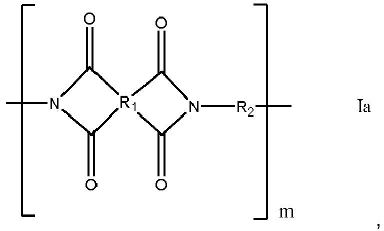 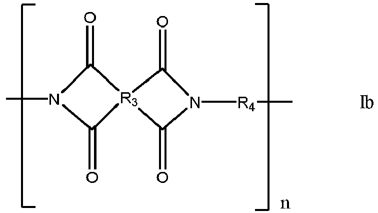
wherein R₁ comprising in total to an extent > 50 mol% of 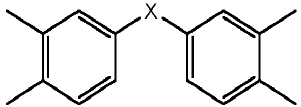
with X being selected from the group consisting of X₁, X₂, X₃, X₄ and mixtures thereof 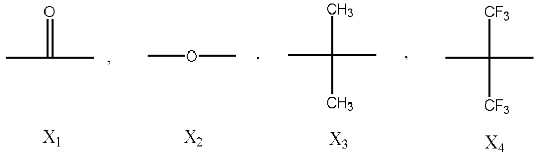 and
wherein R₂ is 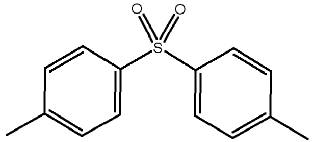 and
wherein R₃ comprising in total to an extent > 50 mol% of 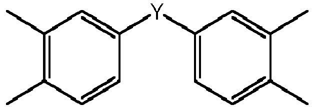
with Y being selected from the group consisting of Y₁, Y₂, Y₃, Y₄ and mixtures thereof 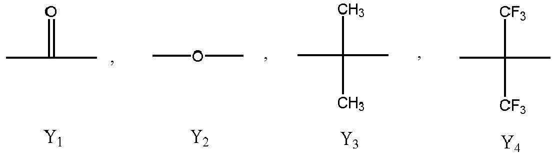 and
wherein R₄ comprising in total to an extent > 50 mol% of R₄ₐ, R₄b, R₄c, R₄d and mixtures thereof 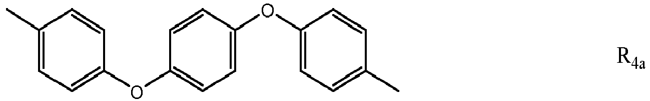 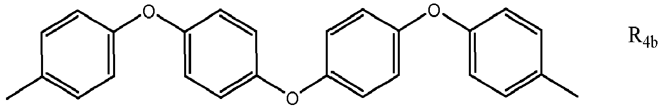 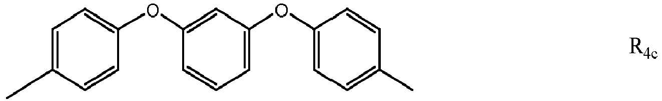 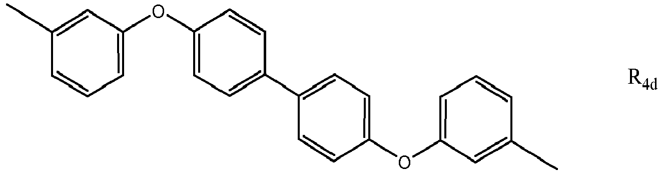
and wherein
R₁ and R₃ may be identical or different,
m = 1 to 1000, preferably from 1 to 500, more preferably from 1 to 200, yet more preferably from 5 to 150, yet still more preferably from 10 to 100, yet still eve more preferably from 10 to 50 and most preferably from 10 to 40,
n = 1 to 1000, preferably from 1 to 500, more preferably from 1 to 200, yet more preferably from 1 to 150, yet still more preferably from 1 to 100, yet still eve more preferably from 1 to 50 and most preferably from 1 to 40,
and wherein
the molar ratio of R₂ to the sum of all R₄ units is in a range of from
0.99 : 0.01 to 0.75 : 0.25, preferably of from 0.98 : 0.02 to 0.78 : 0.22 and more preferred of from 0.95 : 0.05 to 0.80 : 0.20 if R₄ is R₄ₐ or R_{4b} or R_{4c} or a mixture of two to four monomers selected from the group consisting of R₄ₐ, R_{4b}, R_{4c} and R_{4d}, or 0.99 : 0.01 to 0.8 : 0.2 if R₄ is R_{4d}
and wherein
the polyimide comprises end-capping units bound to free amino group of the polymer.

2. Polyimide according to Claim 1,
**characterized in that**
X = X₁ or X₂ or a mixture of X₁ and X₂, preferably X = X₂
and/or
Y = Y₁ or Y₂ or a mixture of Y₁ and Y₂, preferably Y = Y₂
and/or
R₄ comprises R_{4c} and/or R_{4d}.

3. Polyimide according to Claim 1 or 2,
**characterized in that** the end-capping units are mono-functional anhydride monomers without crosslinking functionality, more preferred mono-functional anhydride monomers selected from the group consisting of succinic anhydride, phthalic anhydride and its derivatives according to the following structure 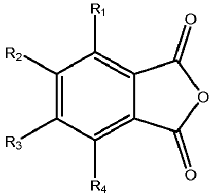 wherein two or three or all four of R₁, R₂, R₃ and R₄ may be identical or all four of R₁, R₂, R₃ and R₄ may be different and are preferably selected from the group consisting of H, methyl, ethyl, tert-butyl and phenyl, and mixtures thereof, preferably the end-capping units are comprised in an amount of ≤ 0.02 mol%, more preferred 0.001 to 0.015 mol%, even more preferred 0.002 to 0.01 mol %, most preferred the mono-functional anhydride monomer as end-capping unit is present in an amount as defined before and simultaneously the sum of all anhydride functionalities is stochiometrically balanced with the sum of all amine functionalities.

4. Polyimide according to any one of claims 1 to 3
**characterized in that** it is a
random copolymer, wherein m and n are preferably in the following ranges
m = 1 to 500, preferably from 1 to 200, yet more preferably from 1 to 150, yet still more preferably from 1 to 100, yet still eve more preferably from 5 to 50 and most preferably from 10 to 40
n = 1 to 200, preferably from 1 to 150, more preferably from 1 to 100, yet more preferably from 1 to 50, yet still more preferably 1 to 40 and most preferably from 1 to 20,
or
block-co-polymer, wherein the building units (A) and (B) each are building blocks (A) and (B) and wherein the block lengths n and m of blocks (A) and (B) are each from 1 to 1000, preferably from 1 to 500, more preferably from 1 to 200, yet more preferably from 5 to 150, yet still more preferably from 10 to 100, yet still eve more preferably from 10 to 50 and most preferably from 10 to 40,

5. Polyimide according to any one of claims 1 to 4,
**characterized in that**
the molecular weight Mₙ of the polyimide, determined by gel permeation chromatography based on polystyrene standards, is in the range from 10 000 to 200 000 g/mol, preferably in the range from 15 000 to 150 000 g/mol, more preferably in the range from 15 000 to 100 000 g/mol, even more preferably 20 000 to 75 000 g/mol and most preferably in the range from 20 000 to 50 000 g/mol,
and/or
**in that** the molecular weight M_{w} of the polyimide, determined by gel permeation chromatography based on polystyrene standards, is in the range from 15 000 to 200 000 g/mol, preferably in the range from 20 000 to 150 000 g/mol, more preferably in the range from 25 000 to 100 000 g/mol, even more preferably 30 000 to 95 000 g/mol and most preferably in the range from 35 000 to 90 000 g/mol,
and/or
**in that** the polydispersity index D is of from 1 to 10, preferably 1.1 to 5, more preferably 1.2 to 4, yet more preferably 1.3 to 3 and most preferably 1.4 to 2.

6. Polyimide according to any of Claims 1 to 5,
**characterized in that**
R₁ consists in total to an extent > 50 mol%, preferably to an extent ≥ 70 mol%, more preferably to an extent ≥ 80 mol%, yet more preferably to an extent from 90 to 100 mol%, yet still more preferably to an extent from 95 to 100 mol% and most preferably to a 100 mol% extent of 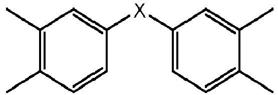 with X being selected from the group consisting of X₁, X₂, X₃, X₄ and mixtures thereof, preferably X being selected from X₁, X₂ and mixtures thereof, more preferred X being X₂, and/or
R₃ consists in total to an extent > 50 mol%, preferably to an extent ≥ 70 mol%, more preferably to an extent ≥ 80 mol%, yet more preferably to an extent from 90 to 100 mol%, yet still more preferably to an extent from 95 to 100 mol% and most preferably to a 100 mol% extent of 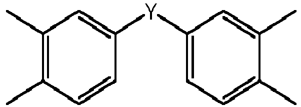 with Y being selected from the group consisting of Y₁, Y₂, Y₃, Y₄ and mixtures thereof, preferably Y being selected from Y₁, Y₂ and mixtures thereof, more preferred Y being Y₂, and/or
R₄ consists in total to an extent > 50 mol%, preferably to an extent ≥ 65 mol%, more preferably to an extent ≥ 80 mol%, yet more preferably to an extent from 90 to 100 mol%, yet still more preferably to an extent from 95 to 100 mol% and most preferably to a 100 mol% extent of R₄ₐ, R_{4b}, R_{4c}, R_{4d} and mixtures thereof, preferably R_{4c}, R_{4d} and mixtures thereof, more preferred of R_{4c}.

7. Polyimide according to any of Claims 1 to 6,
**characterized in that** it comprises one or more additives selected from the group consisting of lubricants, preferably lithium stearate, graphite, metal sulfides, and polymer stabilizers, preferably sterically hindered phenols or sterically hindered amines or phosphite esters.

8. Process for preparing polyimide according to any of Claims 1 to 7,
**characterized in that** is comprises the steps
a. contacting one or more dianhydride(s) correlating to R₁ with 4,4'-diaminodiphenylsulphone and one or more diamines correlating to R₄ and, if R₁ is different from R₃, one or more dianhydride(s) correlating to R₃, to form a polyamic acid
b. imidization of the polyamic acid obtained in step a,
and that
the molar ratio of 4,4'-diaminodiphenylsulphone to the sum of the diamines correlating to R₄ is in a range of from 0.99 : 0.01 to 0.75 : 0.25, preferably of from 0.98 : 0.02 to 0.78 : 0.22 and more preferred of from 0.95 : 0.05 to 0.80 : 0.20 if R₄ is R₄ₐ or R_{4b} a mixture of two to four monomers selected from the group consisting of R₄ₐ, R_{4b}, R_{4c} and R_{4d}, or 0.99 : 0.01 to 0.8 : 0.2, preferably of from 0.98 : 0.02 to 0.81 : 0.19 and more preferred of from 0.95 : 0.05 to 0.82 : 0.18 if R₄ is R₄d
and that
an end-capping unit that reacts with free amino group of the polymer is added before or during step a..

9. Process according to Claim 8,
**characterized in that**
as end-capping unit a mono-functional anhydride monomer without crosslinking functionality, more preferred a mono-functional anhydride monomer selected from the group consisting of succinic anhydride, phthalic anhydride and its derivatives according to the following structure 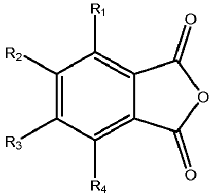 wherein two or three or all four of R₁, R₂, R₃ and R₄ may be identical or all four of R₁, R₂, R₃ and R₄ may be different and are preferably selected from the group consisting of H, methyl, ethyl, tert-butyl and phenyl, and mixtures thereof, is added before or during step a., preferably in an amount of ≤ 0.02 mol%, more preferred 0.001 to 0.015 mol%, even more preferred 0.002 to 0.01 mol %, most preferred the mono-functional anhydride monomer as end-capper is present in an amount as defined before and simultaneously the sum of all anhydride functionalities is stochiometrically balanced with the sum of all amine functionalities.

10. Process according to Claim 9,
**characterized in that**
the sum of all anhydride moieties added in step a. is stoichiometric or under stoichiometric to the sum of to the amine moieties added in step a.

11. Process according to any one of Claims 8 to 10,
**characterized in that**
in step a. the diamine components are heated to the reaction temperature and the di- and if present mono-anhydride components are added to the diamine components during heating or after the reaction temperature is reached,
and/or
in step a. the diamine components are dissolved in an aprotic dipolar solvent or a mixtures of aprotic dipolar solvents or a mixture of solvents comprising a aprotic dipolar solvent, preferably the aprotic dipolar solvents are selected from the group consisting of sulfolane, dimethylformamide, dimethylacetamide, N-methylpyrrolidinone, N-ethylpyrrolidinone, dimethylpropionamide, tetramethylurea, dimethylsulfoxide or mixtures thereof, before the di- and if present mono-anhydride components are added to the diamine components,
and/or
step a. is carried out under water free conditions and/or inert atmosphere,
and/or
the reaction temperature in step a) is of from 0 to 40°C, preferably 3 to 30°C, more preferred 5 to 20°C and most preferred 10 to 15°C.

12. Process according to any one of Claims 8 to 11,
**characterized in that**
imidization in step b. is affected thermally or chemically or by precipitation imidization or by combination of these methods.

13. Process according to any one of Claims 8 to 12,
**characterized in that**
it comprises the additional steps
c. isolating the polyimide
and optionally
d. grinding of the polyimide obtained in step b. or c.
and optionally
e. heating the polyimide to a temperature above its T_{G}, preferably under reduced pressure.

14. Use of a polyimide according to any one of claims 1 to 7 in melt-extrusion, injection molding, direct forming and hot-compression molding processes.
